# EUROPÄISCHE PATENTANMELDUNG

(11) **EP 1 286 507 A1**
(43) Veröffentlichungstag der Anmeldung: **26.02.2003**
(21) Anmeldenummer: 02102138.1
(22) Anmeldetag: 14.08.2002
(51) Int. Cl.: H04L 12/56, G08G 1/0967, G01C 21/26

(54) **Verzögerungsfreie Übermittlung lokaler Informationen über eine Ad-Hoc-Funkverbindung**

(30) Priorität: 16.08.2001 DE 10140336
(71) Anmelder: SIEMENS AKTIENGESELLSCHAFT, 80333 München (DE)
(72) Erfinder: Lott, Matthias, 81477, München (DE); Schulz, Egon, Dr., 80993, München (DE)

(57) **Zusammenfassung**

Die Erfindung bezieht sich auf ein Verfahren zum Übermitteln lokaler Informationen mit weiterreichender Relevanz, bei dem zumindest eine für Fahrzeuge (A1 - A3) relevante lokale Information (NEBEL, UNFALL) nach deren Erfassen in einem Speicher (GM) bereitgestellt und zu späteren Zeitpunkten aus dem Speicher (GM) über eine Funk-Schnittstelle (V3) zu zumindest einer mobilen Station (MS3) eines Fahrzeugs (A3) übertragen wird.

Um die Übertragung möglichst verzögerungsfrei zu ermöglichen, wird vorgeschlagen, dass die Bereitstellung und Übertragung der Information (NEBEL, UNFALL, XMAX) durch eine ortsfeste und lokale Kommunikationseinrichtung (GW) mit eigenständiger Kommunikationsfähigkeit zu den mobilen Stationen (MS3) ausgeführt wird. Zweckmäßigerweise wird dazu ein Ad-Hoc-Kommunikationssystem verwendet, das nicht auf entfernte Einrichtungen und zeitaufwendige Einbuchungsvorgänge zurückgreifen muss.

## Beschreibung

Die Erfindung bezieht sich auf ein Verfahren zum Übermitteln lokaler Informationen mit globaler Relevanz mit den oberbegrifflichen Merkmalen des Patentanspruchs 1 bzw. ein System und ein Kommunikations-Endgerät zum Durchführen eines solchen Verfahrens.

Im Straßenverkehr sind Ereignisse, die lokal auftreten und ohne weitere Hilfsmittel erkannt und verarbeitet werden können, unter Umständen auch außerhalb der unmittelbaren Umgebung bzw. außerhalb des Wirkungsbereiches einer über solche Ereignisse informierenden Einrichtung von Bedeutung. Insbesondere im Straßenverkehr können Ereignisse eintreten, wie z.B. ein Stau aufgrund eines Unfalls oder einer Baustelle, über deren Vorkommnis eine Information für andere Verkehrsteilnehmer außerhalb des unmittelbaren Wirkungsbereiches von Nutzen wäre. Damit Verkehrsteilnehmern diese Informationen lokaler Ereignisse global, das heißt außerhalb des unmittelbaren Wirkungsbereiches, zur Verfügung gestellt werden, müssen geeignete Verfahren entwickelt werden. Dabei kommt es insbesondere im Straßenverkehr auf kurze Verzögerungszeiten an, da kurze Reaktionszeiten für die Nützlichkeit der Information von Bedeutung sind.

In existierenden Informationssystemen werden Informationen über lokale Ereignisse an zentralen Orten (Servern) zusammengetragen. Von dort werden die Informationen durch Funksysteme über einen Rundsenderuf (Broadcast) an die Verkehrsteilnehmer übermittelt. Derartige Systeme, wie z.B. Rundfunk auf Basis von analoger Übertragung oder digitaler Übertragung (DAB, Digital Audio Broadcasting) oder in Zukunft auf Basis von DVB-T/S (Digital Video Broadcasting - Terrestrial/Satellite) sind reine Broadcast-Systeme ohne Funktionen zur bidirektionalen Übertragung.

Alternativ können diese Informationen in Mobilfunknetzen, z.B. gemäß dem GSM- oder dem UMTS-Standard (GSM: Global System for Mobile Communication; UMTS: Universal Mobil Telecommunication System), über Zusatzdienste, wie z.B. einem Kurznachrichtendienst (SMS: Short Message Service), lokale Funk-Datennetze (W-LAN: Wireless Local Areal Network) oder Informations-Dienste zur Verfügung gestellt werden. Hier kann bei Bedarf gezielt die gewünschte Information abgerufen werden. Bevor jedoch auf die Informationen zugegriffen werden kann, muss diese von dem Ort des Geschehens zu der zentralen Einheit (Server) übertragen werden. Erst von dort gelangt diese Information nach Verbindungsaufbau zu dem mobilen Endteilnehmer. Bevor diese Information vorliegt, sind somit Zeiten für die Übertragung zum Server und von dort zum Endteilnehmer aufgetreten, so dass die Aktualität der Nachricht darunter leidet und in vielen Fällen nutzlos ist, z.B. dann, wenn der Verkehrsteilnehmer sich bereits am oder nahe dem Ende des Staus befindet. Durch derzeitig existierende Funksysteme kann somit keine Übertragung zeitkritischer Nachrichten realisiert werden.

Falls die Übertragungszeiten dennoch als akzeptabel angesehen werden können, tritt das Problem auf, diese Informationen zu übertragen und gezielt an die entsprechenden Verkehrsteilnehmer weiterzuleiten, wie z.B. Informationen über Nebelbänke, die nur kurzfristig auftreten und nur in eingeschränkten Umgebungen von Bedeutung sind.

Allgemein wird unter dem Begriff Telematik ein System erörtert, das den Austausch von Informationen auch zwischen Kraftfahrzeugen ermöglicht. Der Datenaustausch zwischen zwei Fahrzeugen oder einem Fahrzeug und einer ortsfesten Station erfolgt dabei über eine Funkschnittstelle. In zunehmenden Maße wird sich Telematik zum Bestandteil der Kraftfahrzeugausstattung entwickeln. Fahrzeugführer können während einer Autofahrt allgemeine oder sicherheitsrelevante Informationen empfangen, beispielsweise über Straßenzustände, Stausituationen oder Stadtpläne des momentan befahrenen Ortes. Ferner ist die Übertragung auch anderer für den Kraftfahrer relevanter Informationen möglich. Neben der Unterhaltung (Entertainment) ist daher insbesondere das sogenannte Infotainment, also die Versorgung mit aktuellen Informationen, von Bedeutung. Nachteilhaft ist bei diesen Systemen, dass zur Übertragung über nicht nur sehr kurze Strecken eine ausreichend hohe Verkehrsdichte erforderlich ist, um die Informationen von Fahrzeug zu Fahrzeug weiterleiten zu können (multi-hopping).

Die Aufgabe der Erfindung besteht darin, ein alternatives Verfahren zum Übermitteln lokaler Informationen mit globaler Relevanz vorzuschlagen. Ferner sollen ein entsprechendes System und ein Kommunikations-Endgerät zum Durchführen eines solchen Verfahrens bereitgestellt werden.

Diese Aufgabe wird durch ein Verfahren mit den Merkmalen des Patentanspruchs 1, eine Kommunikationseinrichtung bzw. eine mobile Station zum Durchführen eines solchen Verfahrens mit den Merkmalen der Patentansprüche 11 bzw. 12 gelöst.

Bei einem Verfahren zum Übermitteln lokaler Informationen mit weiterreichender bzw. regional globaler Relevanz wird zumindest eine für Fahrzeuge relevante lokale Information nach deren Erfassen in einem Speicher bereitgestellt und zu späteren Zeitpunkten aus dem Speicher über eine Funk-Schnittstelle zu mobilen Stationen übertragen, wobei die Bereitstellung und Übertragung der Information durch eine dezentrale und lokale Kommunikationseinrichtung mit eigenständiger Kommunikationsfähigkeit zu den mobilen Stationen eine zeitnahe Übertragung der Information ermöglicht. Räumliche und zeitliche Umwege der Information über zentrale Netzeinrichtungen eines umfassenden Kommunikationsnetzes sind dadurch nicht mehr erforderlich. Informationen, die vor Gefahrensituationen warnen können auf kürztest möglichem Weg und ohne zeitliche Verzögerung zu mobilen Stationen übertragen werden.

Eine entsprechende Kommunikationseinrichtung mit einer Erfassungseinrichtung zum Erfassen und/oder Empfangen solcher lokalen Informationen, mit einem Speicher zum zeitweiligen Speichern und Bereitstellen der Informationen, und mit einer Sendeeinrichtung, insbesondere Sende- und Empfangseinrichtung zum Übertragen der Informationen an eine mobile Station ermöglicht das Durchführen eines solchen Verfahrens insbesondere dann, wenn die Kommunikationseinrichtung eine dezentrale Steuereinrichtung mit eigenständiger Kommunikationsfähigkeit aufweist, die zum eigenständigen Bereitstellen und Übertragen der Informationen zu mobilen Stationen eingerichtet ist.

Mobile Stationen zum Durchführen eines solchen Verfahrens zum Empfang solcher lokalen Informationen sind zweckmäßigerweise in einem Fahrzeug integriert und zum eigenständigen Aufbau einer Funk-Schnittstelle mit der lokalen Kommunikationseinrichtung und/oder einer anderen mobilen Station eingerichtet.

Eine mögliche Anwendung ist die Übermittlung der Information der Sichtverhältnisse auf einer Straße bzw. Autobahn über ein selbstorganisierendes Funknetz zu Fahrzeugen, die kurze Zeit später diese Region durchfahren werden. Bestehen z.B. schlechte Sichtverhältnisse aufgrund von Nebel, wird der Fahrer eine Fahrzeugs rechtzeitig über die Gefahrensituation informiert und kann sich entsprechend verhalten, z.B. die Geschwindigkeit reduzieren.

Vorteilhafte Ausgestaltungen sind Gegenstand abhängiger Ansprüche.

Für die Übertragung der bereitgestellten Information an die mobile Station zuvor einen selbständigen Verbindungsaufbau zwischen der mobilen Station und der lokalen Kommunikationseinrichtung durchzuführen, ermöglicht eine schnelle Übertragung der Information ohne weiteren Zeitverlust durch das Einbuchen in einem üblichen Funk-Kommunikationsnetz.

Durch den direkten Aufbau von Datenverbindungen und der unmittelbaren Übertragung von zeitkritischen Nachrichten kann in einem selbstorganisierenden Funknetz eine schnelle Übermittlung der Daten ermöglicht werden. Aufgrund der lokalen Relevanz und der Bedeutung dieser Informationen innerhalb eines begrenzten Bereiches um dieses Gebiet des Geschehens herum ist daher der Einsatz von Ad-hoc-Netzen besonders vorteilhaft, da sie eine selbstorganisierende Kommunikation genau in diesem Bereich unterstützen.

Der Einsatz von Ad-Hoc-Netzen bietet z.B. besondere Vorteile, wenn beispielsweise nach einem Unfall der nachfolgende Verkehr bzw. der umgebende Verkehr von diesem Unfall in Kenntnis gesetzt werden soll, um anderen Fahrzeugführern ein rechtzeitiges Abbremsen zu ermöglichen. Während bei zellularen Mobilfunksystemen jeweils ein aufwendiger Leitungsaufbau zwischen zwei Teilnehmern erfolgen muss, um anschließend eine Information von einem Teilnehmer an einen oder mehrere andere Teilnehmer übertragen zu können, bieten Ad-Hoc-Netze die Möglichkeit einer solchen direkten Informationsübertragung an andere Teilnehmer bzw. Stationen im Sendebereich.

Anstelle der Übertragung über eine Vielzahl von Netzeinrichtungen können die Informationen bei Ad-Hoc-Netzen mehr oder weniger direkt zwischen den beteiligten Stationen ausgetauscht werden. Dies ermöglicht insbesondere schnellere Reaktionen nachfolgender Fahrzeuge auf einen vorausgehenden Unfall. Relevante Informationen über ein Ereignis an einem anderen Ort können vorteilhafterweise ohne explizite Anforderung mitgeteilt werden, dies im Gegensatz zu GSM z.B., wo Verkehrsinformationen gezielt abgerufen werden müssen.

Vorteilhafterweise wird die Information über zumindest Verbindung, insbesondere eine Funkverbindung einer ortsunabhängigen Relaisstation weitergeleitet. Dadurch kann einerseits eine Verzögerung der Übertragung durch das aufwendigere Verarbeiten in lokalen Stationen verhindert werden und andererseits eine Weiterleitung über Fahrzeuge mit entsprechenden mobilen Stationen ermöglicht werden, um die Reichweite der Informationsübertragung zu vergrößern.

Die Information zusammen mit einer Zeitgültigkeits- und/oder Reichweiten-Zusatzinformation weiterzuleiten, ermöglicht die Beschränkung der Weiterleitung auf eine maximale zeitliche bzw. räumliche Weiterleitung der Information. Lediglich lokal relevante Daten, z.B. über eine Nebelbank, können beispielsweise mit einer Beschränkungs-Zusatzinformation auf wenige Stunden oder Kilometer versehen werden, so dass nur Fahrzeugführer informiert werden, die sich in einer absehbaren Zeit bzw. Entfernung vor dem Erfassungsort befinden. Dadurch kann die Informationsmenge zudem auf ein für den Fahrzeugführer verarbeitbares Maß beschränkt werden.

Die Information von der lokalen Kommunikationseinrichtung auf Anforderung oder ohne Anforderung zur mobilen Station zu übertragen, ermöglicht eine Anpassung an verschiedenartig ausgestattete lokale Kommunikationseinrichtungen und mobile Stationen.

Die Information zusätzlich an ein zentral organisiertes Kommunikationsnetz zu übermitteln ermöglicht statistische Auswertungen, die z.B. eine straßenbauliche Planung zum Entschärfen häufig wiederkehrender Gefahrensituationen ermöglichen.

Die Informationen können zweckmäßigerweise durch eine automatische Erfassungseinrichtung erfasst werden, beispielsweise in Bereichen mit häufig auftretenden Nebelbänken. Sinnvoll ist aber auch eine Erfassungseinrichtung zur Aufnahme und Auswertung einer manuellen oder sprachlichen Anweisung eines Fahrzeugführers, die dann in eine entsprechende Information für andere Fahrzeugführer in nachfolgenden Fahrzeugen umgesetzt wird. Dadurch ist auch eine Informationserzeugung und Informationsweiterleitung möglich, wenn ortsfeste Erfassungseinrichtungen fehlen oder besondere Situationen, wie Unfälle, technisch nicht erfassen können.

Ein Ausführungsbeispiel wird nachfolgend anhand der Zeichnung näher erläutert. Es zeigen:
- Fig. 1: mehrere Fahrzeuge, die miteinander und mit einer lokalen Kommunikationseinrichtung kommunizieren und
- Fig. 2: schematisch einzelne Einrichtungen der kommunizierenden Fahrzeuge und Vorrichtungen.

Für die Übertragung von erfassten Daten, die lokale Ereignisse im Straßenverkehr beschreiben und in ausgedehnten Bereichen außerhalb des unmittelbaren Wirkungsbereiches von Interesse sind, kann ein Funksystem eingesetzt werden. Dieses Funksystem baut zweckmäßigerweise selbständig Verbindungen zwischen den Kommunikationspartnern auf, um die erfassten Daten bzw. Informationen mit lokalem Inhalt an die betroffenen Verkehrsteilnehmer zu übertragen, die sich in dem Bereich befinden oder sich diesem Bereich nähern.

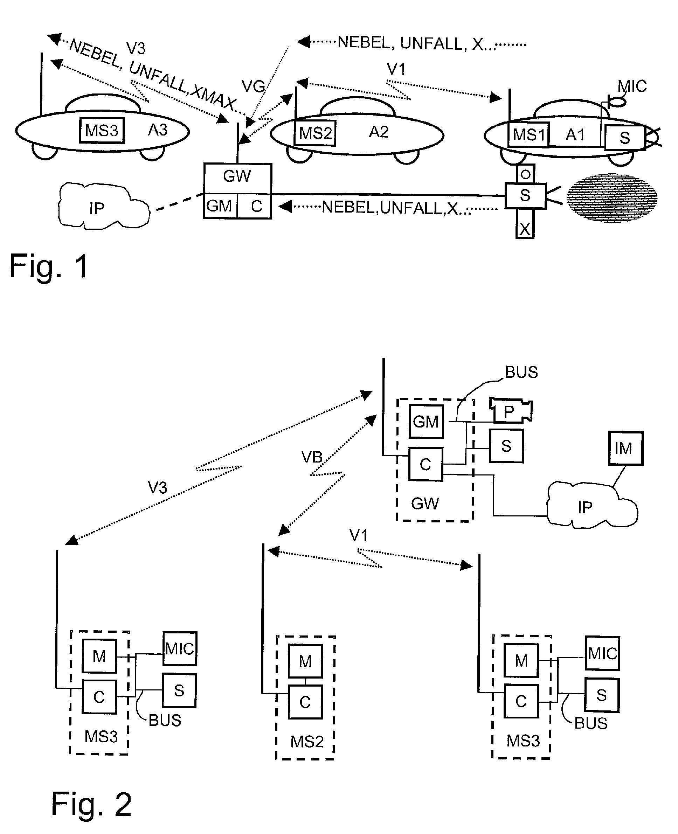

Wie aus den Fig. 1 und 2 ersichtlich, weist dazu eine Vielzahl von Fahrzeugen A1, A2, A3 mobile Stationen MS1, MS2, MS3 auf, die eine Kommunikation über Funkschnittstellen V1, V3 miteinander ermöglichen. Möglich ist auch die Kommunikation der mobilen Stationen MS2 mit ortsfesten Stationen bzw. Kommunikationseinrichtungen GW über entsprechende Funkschnittstellen VG.

Derartige ortsfeste Stationen GW sind sinnvollerweise vollständig eigenständige Stationen eines sogenannten Ad-Hoc-Netzes. Drahtlose Ad-hoc-Netze ermöglichen einerseits die Übertragung von Daten mit lokal relevanten Inhalten an Teilnehmer in unmittelbarer Umgebung und beim vorliegenden Ausführungsbeispiel andererseits die Speicherung der Daten in einem lokalen Speicher GM, um diese bei Bedarf zu einem späteren Zeitpunkt an Verkehrsteilnehmer zu übertragen, falls eine direkte oder indirekte Funkverbindung zu diesen zum Entstehungszeitpunkt der Daten nicht möglich ist.

Die ortsfesten Stationen GW können aber auch eigenständig funktionsfähige Funkstationen eines beliebigen Kommunikationsnetzes sein, die für Empfang, Verarbeitung, Speicherung und Weiterleitung von lokalen Informationen nicht auf Zugriffe auf entfernte Netzeinrichtungen oder zeitaufwendige Prozeduren angewiesen sind.

Neben dem Einsatz eines Ad-Hoc-Netzes ist daher beim Anschluuss einer solchen sich funktechnisch auch selbst organisierenden Kommunikationseinrichtung (GW) auch der Einsatz eines Funk-Kommunikationssystems möglich, beispielsweise gemäß dem GSM- oder dem UMTS-Standard (GSM: Global System for Mobile Communication; UMTS: Universal Mobil Telecommunication System). Als Funk-Kommunikationsnetze können auch funkgestützte Datennetze (W-LAN: Wireless Local Area Network) verwendet werden. Insbesondere ist auch eine Verwendung anderer Kommunikationssysteme möglich, beispielsweise des Internets IP. Der Datenaustausch zwischen den einzelnen Stationen MS1, MS2, MS3, GW kann vorteilhaft über leitungsvermittelte oder paketorientierte Verbindungen erfolgen.

Zum Durchführen des Verfahrens zum Übermitteln lokaler Informationen mit globaler Relevanz erfasst eine Erfassungseinrichtung S, MIC in einem ersten Schritt Informationen (NEBEL, UNFALL). Diese Informationen werden aufbereitet und zu einer mobilen Station MS2, MS3 übertragen.

Die Erfassungseinrichtung S, MIC kann beispielsweise in einem Fahrzeug A1 oder ortsfest am Straßenrand eingerichtet sein. Beispielsweise können in einem Fahrzeug A1 Erfassungseinrichtungen als Sensoren S zur Messung der Luftfeuchtigkeit in der Fahrzeugumgebung, um eine Nebelbildung zu erfassen, als Schalter oder Tastaturen zur manuellen Auslösung eines Informationssignals oder als Mikrophon MIC zur Spracheingabe einer Information ausgebildet sein. Ortsfeste Erfassungseinrichtungen können beispielsweise als Kameras P oder Sensoren S zur Erfassung der Luftfeuchtigkeit, Verkehrsdichte oder Geschwindigkeit vorbeifahrender Fahrzeuge ausgebildet sein. Der Einbau solcher Sensoren S ist insbesondere an Brücken oder in Leitpfosten möglich.

Vorteilhafterweise werden zusammen mit den Informationen auch Zeit- und/oder Ortsdaten X übertragen. Solche Daten können bei ortsfesten Stationen fest einprogrammiert werden. Bei mobilen Stationen MS1 besteht beispielsweise die Möglichkeit, momentane Ortsdaten X aus einem im Fahrzeug A1 installierten GPS-System (GPS: Global Positioning System) zu verwenden. Möglich ist auch die Übertragung von Ortsdaten X von einer ortsfesten Funkstation GW an vorbeifahrende Fahrzeuge A1 - A3 über eine Funkschnittstelle VG, wobei die Ortsdaten dann einer entsprechend groben Rasterung unterliegen.

Liegen zusammen mit der Information auch solche Zeit- oder Ortsdaten vor, so kann eine maximale zeitliche Gültigkeit oder eine maximale räumliche Ausbreitung der Information festgelegt werden. Ein entsprechendes Gültigkeitssignal XMAX kann dann zusammen mit der Information (NEBEL, UNFALL) an die mobile Station MS3 übertragen werden. Die Steuereinrichtung der empfangenden mobilen Station MS3 kann die Information nach Überschreiten der Gültigkeitsbedingung löschen oder deaktivieren.

Nach der Aufbereitung einer Information (NEBEL, UNFALL) kann diese bei Bereitstellung in einem Fahrzeug A1 in einem selbstorganisierenden Ad-Hoc-Funksystem direkt zu einem anderen Fahrzeug A2 mit einer entsprechenden mobilen Station MS2 übertragen werden. Beim vorliegenden Ausführungsbeispiel wird die Information (NEBEL, UNFALL) direkt oder zusätzlich zu der ortsfesten Station bzw. Kommunikationseinrichtung GW übertragen und in einem Speicher GM gespeichert und bereitgestellt. Aufgrund einer endlichen Wahrscheinlichkeit, nach der keine Ende-zu-Ende-Verbindung zur Informationsübertragung aufgebaut werden kann, können die relevanten Informationen durch dieses Abspeichern in der Kommunikationseinrichtung zwischengespeichert und bei Bedarf übertragen werden. So kann ein Fahrzeug A3 vor einer Nebelbank gewarnt werden, obwohl ein anderes Fahrzeug A1, A2, das diese Information zu einem früheren Zeitpunkt erfasst hat, diese Information wegen eines zu großen zeitlichen oder räumlichen Abstands nicht über eine oder mehrere Teilstreckenverbindungen (Multihop-Verbindung) mitteilen konnte.

Fahrzeuge A3 mit mobilen Stationen MS3, die zu einem späteren Zeitpunkt in den Funkbereich der Kommunikationseinrichtung GW gelangen, bekommen die bereitgestellte Information NEBEL, UNFALL und gegebenenfalls eine Gültigkeits-Zusatzinformation XMAX nach dem Aufbau der Funkschnittstelle V3 aus dem Speicher GM übertragen. Die Übertragung der Information kann dabei automatisch oder auf Anforderung erfolgen.

Insbesondere ist auch eine Übertragung der Information über unter Umständen mehrere Teilstreckenverbindungen möglich. Als Relaisstationen können ortsfeste oder mobile Stationen verwendet werden.

Zur Steuerung der mobilen Station MS1 - MS3 sind diese mit einer Steuereinrichtung C zum Steuern des Datenaustauschs und der Funkschnittstelle und mit einem Speicher M zum Abspeichern von Betriebsparametern für den Funkbetrieb eingerichtet. Die Verbindung von Steuereinrichtung C und Speicher M kann über eine direkte Verbindung oder einen Bus BUS erfolgen. Vorteilhafterweise können an einen solchen Bus auch weitere Einrichtungen angeschlossen werden, wie beispielsweise die Erfassungseinrichtungen S, MIC.

Vorteilhafterweise weist die ortsfeste Station GW, wenn diese als eine Art Gateway ausgebildet ist. Zusätzlich kann sie auch eine Schnittstelle zu einem Datennetz oder dem Internet IP aufweisen. Dadurch kann die ortsfeste Station GW zusätzlich einerseits zur allgemeinen Versorgung der vorbeifahrenden Fahrzeuge A1 - A3 mit allgemeinen Informationen verwendet werden und andererseits auch Daten, die die ortsfeste Station GW von Fahrzeugen A1 - A3 erhalten hat, an eine zentrale Speichereinrichtung IM innerhalb des Netzes IP weiterleiten.

Fahrzeuge im vorstehenden Sinne sind weitestgehend bewegte Objekte, insbesondere Kraftfahrzeuge, Lastkraftfahrzeuge, Flugzeuge bis hin zu Gleitschirmen, schienengebundene Fahrzeuge und Wasserfahrzeuge, aber auch motorunabhängige Fahrzeuge wie Fahrräder und dergleichen.

Eine Anwendung sieht vor, dass Informationen über einen Stau an die Verkehrsteilnehmer kurz vor Eintreffen in den Stau mitgeteilt und diese dadurch vor dem Stau gewarnt werden. Die Verkehrsteilnehmer können so z.B. rechtzeitig vor einem Stau die Geschwindigkeit reduzieren, selbst wenn das Stauende nicht in Sichtweite liegt oder z.B. aufgrund einer Bergkuppe verdeckt ist.

Eine weitere Anwendung sieht die Informationsgenerierung durch Spracherkennung vor. Ein Verkehrsteilnehmer spricht z.B. die Nachricht "Stau" in ein als Erfassungseinrichtung dienendes Mikrophon MIC, wobei die Nachricht digitalisiert und an die nachfolgenden Teilnehmer weitergeleitet wird.

Weiterhin kann eine Funktion vorgesehen werden, bei der durch einen Fahrzeugführer ein Knopf gedrückt wird, woraufhin eine Nachricht "Stau" oder "Unfall" generiert und an die übrigen Verkehrsteilnehmer ausgesendet wird.

## Patentansprüche

1. Verfahren zum Übermitteln lokaler Informationen mit weiterreichender Relevanz, bei dem
- zumindest eine für Fahrzeuge (A1 - A3) relevante lokale Information (NEBEL, UNFALL) nach deren Erfassen in einem Speicher (GM) bereitgestellt und
- zu späteren Zeitpunkten aus dem Speicher (GM) über eine Funk-Schnittstelle (V3) zu zumindest einer mobilen Station (MS3) von einer Vielzahl mobiler Stationen (MS1-MS3) übertragen wird,
**dadurch gekennzeichnet,**
- **dass** die Bereitstellung und Übertragung der zumindest einen Information (NEBEL, UNFALL, XMAX) durch eine ortsfeste und lokale Kommunikationseinrichtung (GW) mit eigenständiger Kommunikationsfähigkeit zu den mobilen Stationen (MS3) ausgeführt wird.

2. Verfahren nach Anspruch 1, bei dem zur Übertragung der bereitgestellten zumindest einen Information (NEBEL, UNFALL, XMAX) an die mobile Station (MS3) ein selbständiger Verbindungsaufbau über die Funk-Schnittstelle (V3) zwischen der mobilen Station (MS3) und der lokalen Kommunikationseinrichtung (GW) durchgeführt wird.

3. Verfahren nach Anspruch 1 oder 2, bei dem zur Übertragung der zumindest einen Information (NEBEL, UNFALL) an die mobile Station (MS3) als die Funk-Schnittstelle (V3) eine Funkverbindung eines Ad-Hoc-Netzes zwischen der mobilen Station (MS3) und der lokalen Kommunikationseinrichtung (GW) aufgebaut wird.

4. Verfahren nach einem vorstehenden Anspruch, bei dem die zumindest eine Information (NEBEL, UNFALL) nach dem Erfassen und vor dem Bereitstellen im Speicher (GM) und/oder während dem Übertragen zur mobilen Station (MS3) über zumindest eine Verbindung (V1) einer ortsunabhängigen Relaisstation (A2, MS2) weitergeleitet wird.

5. Verfahren nach einem vorstehenden Anspruch, bei dem die zumindest eine Information (NEBEL, UNFALL) nach dem Erfassen und vor dem Bereitstellen im Speicher (GM) und/oder während dem Übertragen zur mobilen Station (MS3) zusammen mit einer Reichweiten-Zusatzinformation (XMAX) weitergeleitet wird, wobei die Reichweiten-Zusatzinformation (XMAX) die Weiterleitung auf eine maximale räumliche Weiterleitung der zumindest einen Information (NEBEL, UNFALL) von deren Erfassungsort (X) oder Bereitstellungsort (GW) beschränkt.

6. Verfahren nach einem vorstehenden Anspruch, bei dem die zumindest eine Information (NEBEL, UNFALL) nach dem Erfassen und vor dem Bereitstellen im Speicher (GM) und/oder während dem Übertragen zur mobilen Station (MS3) zusammen mit einer Zeitgültigkeits-Zusatzinformation (XMAX) weitergeleitet wird, wobei die Zeitgültigkeits-Zusatzinformation (XMAX) die Gültigkeit und/oder Weiterleitung der zumindest einen Information (NEBEL, UNFALL) auf eine Dauer von deren Erfassungszeitpunkt oder Bereitstellungszeitpunkt beschränkt.

7. Verfahren nach einem vorstehenden Anspruch, bei dem die zumindest eine Information (NEBEL, UNFALL) nach dem Erfassen und Bereitstellen im Speicher (GM) von der lokalen Kommunikationseinrichtung (GW) auf Anforderung oder ohne Anforderung zur mobilen Station (MS3) übertragen wird.

8. Verfahren nach einem vorstehenden Anspruch, bei dem die lokale Kommunikationseinrichtung (GW) die zumindest eine Information (NEBEL, UNFALL) zusätzlich an ein zentral organisiertes Kommunikationsnetz (IP) übermittelt, insbesondere für statistische Auswertungen übermittelt.

9. Verfahren nach einem vorstehenden Anspruch, bei dem als die zumindest eine Information (NEBEL, UNFALL) verkehrsrelevante Daten für das Vorfeld eines sich längs einer vorgegebenen Strecke bewegenden Fahrzeugs (A3) erfasst und bereitgestellt werden.

10. Verfahren nach einem vorstehenden Anspruch, bei dem die zumindest eine Information (NEBEL, UNFALL) durch eine automatische Erfassungseinrichtung (S) oder durch eine Erfassungseinrichtung (S, MIC) für eine manuelle oder akustische, insbesondere sprachlich-akustische Anweisung einer Person erfasst wird.

11. Kommunikationseinrichtung (GW) zum Durchführen eines Verfahrens nach einem vorstehenden Anspruch mit
- einer Erfassungseinrichtung (S, C) zum Erfassen und/oder Empfangen zumindest einer lokalen Information (NEBEL, UNFALL),
- einem Speicher (GM) zum zeitweiligen Speichern und Bereitstellen der zumindest einen Information (NEBEL, UNFALL),
- einer Sendeeinrichtung, insbesondere Sende- und Empfangseinrichtung (C) zum Übertragen der zumindest einen Information (NEBEL, UNFALL) an zumindest eine mobile Station (MS3) **gekennzeichnet durch**,
- eine Steuereinrichtung (C) mit eigenständiger Kommunikationsfähigkeit in der Kommunikationseinrichtung (GW), die zum eigenständigen Bereitstellen und Übertragen der zumindest einen Information (NEBEL, UNFALL, XMAX) zu der bzw. den mobilen Stationen (MS3) eingerichtet ist.

12. Mobile Station (MS) zum Durchführen eines Verfahrens nach einem vorstehenden Anspruch,
**dadurch gekennzeichnet ,**
- **dass** die mobile Station (MS3) in einem Fahrzeug (A3) integriert ist und
- **dass** die mobile Station (MS3) zum Empfang lokaler Informationen (NEBEL, UNFALL, XMAX) zum eigenständigen Aufbau einer Funk-Schnittstelle (V3) mit der lokalen Kommunikationseinrichtung und/oder einer anderen mobilen Station (MS1, MS2) eingerichtet ist.
